# EUROPEAN PATENT APPLICATION

(11) **EP 4 836 327 A1**
(43) Date of publication of application: **04.11.2026**
(21) Application number: 24920637.6
(22) Date of filing: 25.01.2024
(51) Int. Cl.: H04H 40/90, H04N 21/438, H04N 21/61

(54) **SATELLITE BROADCASTING RECEIVER AND METHOD FOR CONTROLLING SAID SATELLITE BROADCASTING RECEIVER**

(71) Applicant: LG Electronics Inc., Yeongdeungpo-gu Seoul 07336 (KR)
(72) Inventor: HWANG, Chasung, Seoul 06772 (KR)
(74) Representative: Vossius & Partner Patentanwälte Rechtsanwälte mbB
(86) International application number: PCT/KR2024/001175
(87) International publication number: WO 2025/159220

(57) **Abstract**

The present invention relates to a satellite broadcasting receiver and comprises: an interface unit that receives a satellite broadcast signal corresponding to a selected channel and transmits, to a switch, a command signal including channel selection information for channel selection; a tuning unit that demodulates and decodes the received satellite broadcast signal, and detects whether or not a preset bit string is included in decoded data; and a control unit that, when transmission of command signals respectively corresponding to a plurality of channels is requested, transmits each command signal to the switch in a preset order according to a set delay time, determines whether or not it is possible to fix a channel, from a satellite broadcast signal received whenever a command signal is transmitted, and changes the delay time according to whether or not it is possible to fix the channel.

## Description

### Technical Field

The disclosure relates to a receiving device configured to receive a satellite broadcast signal and a method of controlling the receiving device.

### Background Art

Generally, satellite broadcasting may refer to a broadcasting method in which a broadcasting satellite located in a geostationary orbit at an altitude of about 35,000 to 36,000 km relays a broadcast signal transmitted from a terrestrial broadcasting station and radiates the broadcast signal to the ground, and each household on the ground having a receiver configured to receive a satellite broadcast signal receives the broadcast signal to play back broadcast content. Such satellite broadcasting has advantages in that poor reception areas rarely occur within a radio wave range of the satellite broadcast signal, and broadcast content having clear picture quality and excellent sound may be reproduced.

In addition, as digital TV broadcasting becomes generalized and digital broadcast content is provided accordingly, there is also a trend toward which satellite broadcasting having the above-mentioned advantages becomes popularized. In addition, satellite broadcast receivers having various additional functions such as simple reception and decoding of digital broadcast data as well as a video on demand (VOD) function, a home network host function, etc. are emerging.

As such, as the satellite broadcasting becomes popularized and a number of users increases, such a method that a plurality of receivers control one satellite antenna through a switch to receive satellite broadcast signals has emerged. Further, digital satellite equipment control (DiSEqC), which is an international standard for defining positioning to adjust an elevation angle and an azimuth angle of a satellite antenna to allow a plurality of receivers to receive satellite broadcast signals using a single satellite antenna, and a switch control method for the positioning, has emerged. Accordingly, at present, a satellite broadcast receiver is generally designed to receive a satellite broadcast signal by controlling a satellite antenna through a switch according to the DiSEqC standard. In this case, the satellite broadcast receive transmits a command signal according to the DiSEqC standard to a switch, and the switch adjusts an elevation angle and an azimuth angle of the satellite antenna according to the received command signal.

The command signal according to the DiSEqC standard may be transmitted from the satellite broadcast receiver to the switch to select a transponder (TP) of a selected channel each time channel switching is selected in the satellite broadcast receiver. Then, each time the switch receives the command signal, the switch processes the received command signal by performing parsing, and accordingly, a time for processing the command signal is needed. In addition, when the satellite broadcast receiver is connected to the switch, the satellite broadcast receiver continuously transmits an analog signal (hereinafter, referred to as a tone burst signal) of a constant frequency (e.g., 22 KHz) to the switch. When the command signal is transmitted to the switch, an idle time for distinguishing between the tone burst signal and the command signal is needed. Accordingly, even when a plurality of command signals are continuously transmitted to the receiver as channels are continuously switched in the satellite broadcast receiver (e.g., when performing a function of auto tuning), the satellite broadcast receiver transmits the command signals with a certain delay time (command interval delay) between the command signals or between the tone burst signal and the command signal.

However, a time for processing the command signals by the switch may vary depending on performance of the switch, e.g., performance of a micom of the switch. However, since the satellite broadcast receiver is unaware of exact performance of the switch, a delay time is set to a sufficiently long time so that the command signals may be sufficiently processed even during connection to a switch having poor performance.

However, when a delay time provided between the command signals is increased as described above, a time needed for channel switching may increase. Furthermore, when performance of the switch is sufficient, a delay time set to be sufficiently long may work as an unnecessary delay time needed for channel switching, and this may be accumulated when a plurality of command signals are continuously transmitted as in the auto tuning. In addition, such an unnecessary delay time may cause a misconception of a failure of the satellite broadcast signal receiver or a user's complaint.

### Disclosure of Invention

### Technical Problem

Therefore, to obviate those he above-mentioned problems and other problems, an objective of the disclosure is to provide a satellite broadcasting receiver having a fast channel switching time and a method of controlling the satellite broadcasting receiver.

In addition, an objective of the disclosure is to provide a satellite broadcast receiver having a command interval delay optimized according to performance of a switch, and a method of controlling the satellite broadcast receiver.

### Solution to Problem

To achieve these and other advantages and in accordance with the purpose of one aspect of the disclosure, as embodied and broadly described herein, there is provided a satellite broadcast receiver including an interface unit configured to receive, from a switch configured to select a satellite broadcast signal received by a satellite antenna, a satellite broadcast signal corresponding to a selected channel and transmit, to the switch, a command signal including channel selection information for selecting the channel, a tuning unit configured to demodulate and decode the satellite broadcast signal received from the switch, and detect whether decoded data contains a preset bit sequence, and a control unit configured to transmit, when transmission of command signals respectively corresponding to a plurality of channels is requested according to a user request or execution of a preset function, each of the command signals to the switch according to a preset order based on a preset delay time, and control the tuning unit to demodulate and decode a satellite broadcast signal received from the switch each time a command signal is transmitted, based on a frequency of a channel corresponding to the transmitted command signal, determine whether channel locking is achievable with respect to a channel corresponding to the transmitted command signal depending on whether the decoded data contains a preset bit sequence, and change the delay time depending on whether the channel locking is achievable.

In one embodiment, it is characterized that the control unit increases the delay time by a preset time, when the channel locking is not achievable as a result of determining whether the channel locking is achievable with respect to a channel selected according to the preset order, and transmits a command signal corresponding to the selected channel again to the switch to re-determine whether the channel locking is achievable, when the increased delay time has elapsed.

In one embodiment, it is characterized that the tuning unit includes an oscillation part configured to oscillate a local signal having a local frequency corresponding to a frequency of the channel selected according to the preset order, a demodulation part configured to demodulate a satellite broadcast signal of which a frequency band has been changed according to the satellite broadcast signal mixed with the local signal, a decoding part configured to decode the demodulated satellite broadcast signal using a decoding method corresponding to a preset encoding method, and a channel tuning detection part configured to detect the preset bit sequence from a data stream of the decoded satellite broadcast signal.

In one embodiment, it is characterized that the control unit mixes the local signal with the satellite broadcast signal received from the switch to convert the received satellite broadcast signal into a signal having a preset frequency band, and when the selected channel is changed to another channel, controls the oscillation part to oscillate a local signal having a local frequency corresponding to a frequency of the another channel obtained by the changing, and mixes the local signal having the local frequency corresponding to the frequency of the another channel with the satellite broadcast signal received from the switch.

In one embodiment, it is characterized that when the demodulation of the satellite broadcast signal is completed, the control unit corrects an error that may occur during a process of the demodulation according to at least one of preset error correction methods, and the preset error correction methods include forward error correction (FEC).

In one embodiment, it is characterized that when the transmission of the command signals respectively corresponding to the plurality of channels is requested according to the user request or the execution of the preset function, the control unit determines whether channel locking is achievable according to a command signal transmitted by setting a preset minimum delay time, and gradually increases a delay time from the minimum delay time according to a result of the determining of whether the channel locking is achievable.

In one embodiment, it is characterized that the minimum delay time is a time equal to or greater than a delay time between command signals (command interval delay) specified in a digital satellite equipment control (DiSEqC) international standard.

In one embodiment, it is characterized that the command signal includes, as channel selection information for selecting a particular channel, transponder (TP) information including information about a satellite configured to transmit a broadcast signal corresponding to the particular channel and information about a polarization direction of a satellite signal corresponding to the particular channel and a frequency band corresponding to the particular channel.

In one embodiment, it is characterized that the control unit transmits a command signal corresponding to a channel selected according to the preset order, and when channel locking is achievable with respect to the selected channel as a result of the determining of whether the channel locking is achievable, store information about the selected channel as channel information and store information about the changed delay time, and each time channel locking based on a transmitted command signal is achievable, updates the stored delay time with information about a delay time between a command signal corresponding to a channel for which the channel locking is achievable and a command signal that was previously transmitted.

In one embodiment, it is characterized that when continuous channel switching requests are received, the control unit sequentially transmits, to the switch, a plurality of command signals corresponding to the continuous channel switching requests based on prestored delay time information.

In one embodiment, it is characterized that the preset function is channel tuning, the control unit performs the channel tuning when a preset condition is met, and the preset condition includes a case when information about a prestored channel is not present, a case when at least a part of a satellite broadcast program is updated, a case when at least one of the switch and the satellite antenna is changed, and a case when channel locking is not achieved with respect to a satellite broadcast reception signal corresponding to a channel in accordance with information about the prestored channel.

In one embodiment, it is characterized that the satellite broadcasting receiver includes a television (TV) system.

To achieve these and other advantages and in accordance with the purpose of one aspect of the disclosure, as embodied and broadly described herein, there is provided a method of controlling a satellite broadcast receiver, the method including checking, when transmission of command signals respectively corresponding to a plurality of channels is requested, whether a preset delay time has elapsed after a second command signal corresponding to a second channel selected prior to a first channel selected according to a preset order has been transmitted to a switch configured to select a satellite broadcast signal received by a satellite antenna, transmitting a first command signal including channel selection information about the first channel to the switch when the delay time has elapsed, determining whether channel locking is achievable with respect to the satellite broadcast signal received from the switch according to the first command signal, storing the channel information about the first channel when the channel locking is achievable as a result of the determining of whether the channel locking is achievable, and changing the delay time and checking whether the delay time has elapsed based on the changed delay time when the channel locking is not achievable as a result of the determining of whether the channel locking is achievable, transmitting the first command signal to the switch, and performing again the determining of whether the channel locking is achievable.

In one embodiment, it is characterized that the determining of whether the channel locking is achievable includes oscillating a local signal having a local frequency corresponding to a frequency of the first channel, mixing, with the local signal, a satellite broadcast signal received from the switch according to the first command signal, modulating and decoding the satellite broadcast signal mixed with the local signal to have a converted frequency band, and determining whether channel locking is achievable depending on whether a bit sequence corresponding to a preset channel tuning frame is included, based on a data stream corresponding to the decoded satellite broadcast signal.

In one embodiment, it is characterized that the delay time is set as a preset minimum delay time and gradually increased in units of a preset time, each time the delay time is changed.

### Advantageous Effects of Invention

Hereinafter, effects of a satellite broadcast receiver and a method of controlling the same according to the disclosure are described.

According to at least one embodiment of the disclosure, the disclosure has an effect of minimizing channel switching time by detecting a delay time between command signals (command interval delay) optimized according to performance of a switch and transmitting a command signal according to channel switching based on the detected command interval delay.

### Brief Description of Drawings

FIG. 1 illustrates an example of a satellite broadcasting receiving system according to an embodiment of the disclosure.
FIGS. 2A and FIGS. 2B are block diagrams illustrating a configuration of a satellite broadcasting receiver according to an embodiment of the disclosure.
FIG. 3 is a flowchart illustrating a process of operating the satellite broadcasting receiver according to an embodiment of the disclosure.
FIG. 4 is a detailed flowchart illustrating the operation process of FIG. 3 for determining whether a channel locking is achievable, the determining being performed by the satellite broadcasting receiver according to an embodiment of the disclosure.
FIGS. 5A and FIGS. 5B illustrate examples in which a plurality of command signals are transmitted from a general satellite broadcasting receiver and the satellite broadcasting receiver according to an embodiment of the disclosure, respectively.

### Mode for the Invention

It is noted that the technical terms used herein are used only to describe specific embodiments and are not intended to limit the disclosure. In addition, a singular representation used herein may include a plural representation unless it represents a definitely different meaning from the context. In general, a suffix such as "module" and "unit" may be used to refer to elements or components. Use of such a suffix herein is merely intended to facilitate description of the specification, and the suffix itself is not intended to give any special meaning or function.

In the disclosure, the terms "comprising" or "including" should not be construed to necessarily include all of the elements or steps disclosed herein, and should be construed not to include some of the elements or steps thereof, or should be construed to further include additional elements or steps.

In addition, in describing the disclosure, the detailed description will be omitted when a specific description for publicly known technologies to which the disclosure pertains is judged to obscure the gist of the disclosure.

The accompanying drawings are used to help easily understand the technical idea of the disclosure and it should be understood that the idea of the disclosure is not limited by the accompanying drawings. The idea of the disclosure should be construed to extend to any alterations, equivalents and substitutes besides the accompanying drawings. In addition, each of the embodiments described below, as well as combinations of embodiments, are changes, equivalents, or substitutes included in the spirit and technical scope of the disclosure, and may fall within the spirit and technical scope of the disclosure.

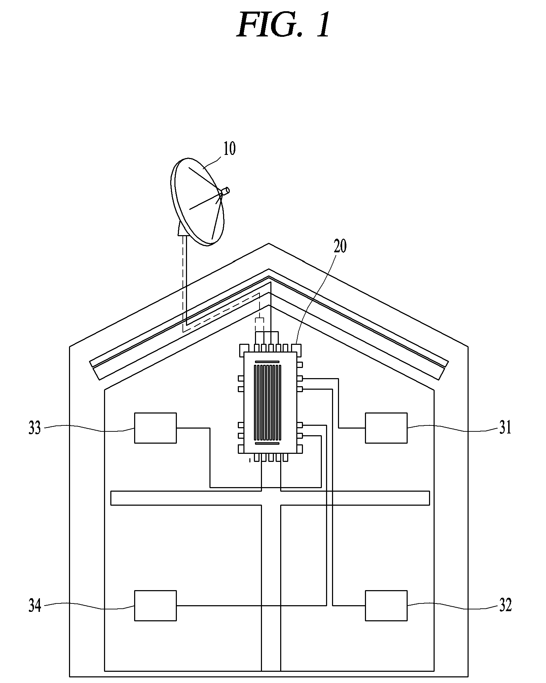

FIG. 1 illustrates an example of a satellite broadcasting receiving system according to an embodiment of the disclosure.

Referring to FIG. 1, the satellite broadcast receiving system according to an embodiment of the disclosure may be configured to include a satellite antenna 10 including a low noise blockdown converter (LNB), a switch 20 connected to the satellite antenna 10 and configured to control an elevation angle and an azimuth angle of the satellite antenna, and a plurality of different satellite broadcasting receivers 31, 32, 33, and 34 (hereinafter collectively referred to as 30) connected to the switch.

Here, the satellite antenna 10 is an antenna configured to receive a satellite signal, and may be a parabolic antenna. In addition, the LNB, which is a frequency converter configured to lower a satellite frequency to a frequency of each satellite broadcasting receiver (e.g., a set-top box), may be included. In addition, elevation and azimuth angles of the satellite antenna 10 may be changed according to control of the switch, and the satellite antenna 10 may receive satellite signals based on different elevation or azimuth angles and different frequencies.

Meanwhile, the switch 20 may receive broadcast signals of different channels depending on the satellite signals received from the satellite antenna 10. The switch 20 may control a reception angle and a reception direction of the satellite antenna 10 according to a command received from the satellite broadcasting receiver 30, and search for channels provided for respective transponders (TP) by searching for each frequency within a preset range.

The respective TPs may be different from each other in at least one of a reception angle or a reception direction of the satellite antenna 10. and a frequency. For example, input signals from the satellite antenna 10 may be classified according to different combinations of received satellite information, a polarization direction of a satellite signal (e.g., horizontal or vertical polarization), and a frequency band (e.g., a high frequency band or a low frequency band) to configure different TPs, respectively. For example, when the input signals of the satellite antenna 10 are classified according to combinations of two different satellite signal polarization directions and two different frequency bands as described above, four types of satellite signal inputs may be generated for one satellite. In addition, one or more channels may be assigned to each TP. In this case, different frequencies within a same frequency band may be allocated to respective channels assigned to a same TP
The satellite broadcasting receiver 30 may include information about satellite signal inputs corresponding to the respective TPs in a form of a list. In addition, the list of the satellite signal inputs corresponding to the TPs may include a list of channels corresponding to the TPs, respectively. Hereinafter, the information about the satellite signal inputs corresponding to the respective TPs and the list of channels allocated to the respective TPs are to be referred to as a TP list.

Meanwhile, when a signal for selecting a satellite broadcasting signal according to a digital satellite equipment control (DiSEqC) international standard is received from the satellite broadcasting receiver 30, the satellite broadcasting receiver 30 may receive, from the satellite antenna 10, a satellite broadcasting signal corresponding to the received selection signal. In this case, for example, when a TP having an elevation or azimuth angle different from that of a currently set satellite antenna 10 is selected, the satellite broadcasting receiver 30 may control a drive motor of the satellite antenna as needed to control the satellite antenna 10 to be directed toward an elevation angle or an azimuth angle corresponding to a currently selected TP. In this case, the signal for selecting a satellite broadcast signal may be a channel selection signal for selecting a channel allocated to a particular TP.

Here, the channel selection signal may be transmitted from the satellite broadcasting receiver 30. To this end, the satellite broadcasting receiver 30 may include the TP list in a memory thereof and transmit, to the switch, a signal including information about a TP corresponding to a selected channel based on the TP list. In this case, the signal including the information about the TP corresponding to the selected channel is a signal for controlling the switch 20, and may be a command signal for controlling the switch 20 according to the DiSEqC international standard.

Meanwhile, the satellite broadcasting receiver 30 may be a set-top box placed in each household or a TV system directly connected to the switch 20. In this case, the TV system may have functions of the set-top box. Therefore, the TV system may have not only content playback functions of demodulating, decoding, playing back a broadcast signal, but also a function such as channel tuning.

The channel tuning function may be a function of searching channel selection information corresponding to each channel when channel information of each broadcast channel is changed, such as when the satellite broadcast receiver 30 is newly installed or when a broadcast system is updated. The channel tuning function may be referred to as auto tuning, etc., and performed according to selection by a user or when preset conditions such as an update of the broadcasting system or channel information are satisfied.

Meanwhile, when a particular channel is selected by the user or according to the channel tuning function, the satellite broadcasting receiver 30 may transmit channel selection information corresponding to the selected channel to the switch 20. The channel selection information is information of a TP corresponding to the selected channel, and may include information about an input of a satellite signal corresponding to the selected channel, e.g., information about a combination based on a polarization direction (e.g., horizontal or vertical polarization) of a particular satellite signal and a particular frequency band (e.g., a high frequency band or a low frequency band). In addition, the channel selection information may be a command signal, and input to the switch 20. In response to transmission of the command signal, a satellite broadcast signal corresponding to the input of the satellite signal corresponding to the selected channel may be received by the satellite broadcasting receiver 30.

Then, the satellite broadcasting receiver 30 may demodulate the received satellite broadcast signal based on a local frequency corresponding to the selected channel. In addition, the demodulated satellite broadcast signal may be decoded into a data stream, and whether channel locking is achievable may be detected from the data stream obtained by the decoding. In addition, when channel locking is achievable, information about the selected channel may be stored as channel information. In addition, the satellite broadcasting receiver 30 may play back the data stream obtained by the decoding to output a video signal and/or an audio signal corresponding to the received satellite broadcast signal through a display unit and/or an audio output unit.

Meanwhile, when the user continuously switches channels or when the channel tuning function is executed, a plurality of command signals sequentially containing different channel selection information may be continuously transmitted to the switch 20.

Meanwhile, as such, when the plurality of command signals are transmitted continuously, the switch 20 may process the plurality of command signals in an order in which the plurality of command signals are received. However, when another command signal is received before processing of a command signal previously received is completed, different command signals may be processed together, thereby causing an error in controlling the satellite antenna 10. Accordingly, when a command signal is transmitted, the satellite broadcasting receiver 30 transmits another command signal after a preset delay time has elapsed. This may cause occurrence of a delay time between command signals.

Meanwhile, a command signal processing time of the switch 20 may vary depending on performance of the switch 20 and/or the satellite antenna 10. For example, when performance of the switch 20 and/or the satellite antenna 10 is inferior, and thus, a long period of time is needed to receive a satellite broadcast signal corresponding to a combination of satellite signal inputs based on channel selection information (TP information) included in command signals, a time for processing the command signals may be increased. On the other hand, when performance of the switch 20 and/or the satellite antenna 10 is excellent, and thus, a satellite broadcast signal corresponding to a combination of satellite signal inputs based on channel selection information (TP information) included in command signals may be received within a very short time, a time for processing the command signals may be greatly reduced. Therefore, it is obvious that, when performance of the switch 20 and/or the satellite antenna 10 is excellent, and thus, a time for processing command signals is very short, a satellite broadcast signal of a selected channel may be correctly received even when a delay time between the command signals is reduced.

Accordingly, when a preset condition is satisfied, the satellite broadcasting receiver 30 according to an embodiment of the disclosure may detect a command signal processing time of the switch 20 and set a delay time between the command signals according to the detected command signal processing time to thereby further reduce a channel switching time.

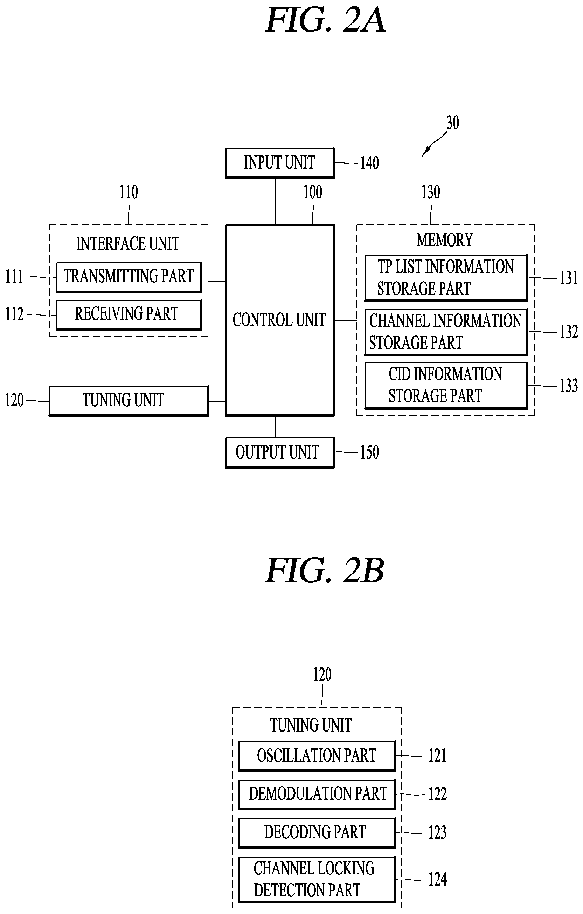

FIGS. 2A and FIGS. 2B are block diagrams illustrating a configuration of the satellite broadcasting receiver 30 according to an embodiment of the disclosure.

Referring to FIG. 2A, the satellite broadcasting receiver 30 according to an embodiment of the disclosure includes a control unit 100, an interface unit 110 connected to the control unit 100 and controlled by the control unit 100, a tuning unit 120, a memory 130, and an input unit 140. In addition, when a TV system is included, the satellite broadcasting receiver 30 may be configured to include an output unit 150 capable of outputting a video signal and an audio signal according to a data stream demodulated and decoded through the tuning unit 120. Meanwhile, components illustrated in FIG. 2A are not essential for implementing the satellite broadcasting receiver 30. The satellite broadcasting receiver 30 described herein may include more or less components than those mentioned above.

In detail, among the components mentioned above, the interface unit 110 is connected to the switch 20, and may transmit various control signals to the switch 20 or receive satellite broadcast signals from the switch 20. To this end, the interface unit 110 may include a transmitting part 111 including a transmitting interface capable of transmitting a command signal to the switch 20 and a receiving part 112 including a receiving interface capable of receiving a satellite broadcast signal from the switch 20. Here, it is obvious that the transmitting part 111 and the receiving part 112 may be configured as a single interface.

In addition, the tuning unit 120 may establish a broadcast view environment to receive a satellite broadcast signal corresponding to a selected channel. To this end, when a satellite broadcast signal is received, the tuning unit 120 may demodulate the received satellite broadcast signal, decode the demodulated satellite broadcast signal into a data stream, and determine whether channel locking may be achieved, based on the decoded data stream. In addition, depending on whether the channel locking may be achieved, information about the selected channel may be stored as channel information. To this end, the tuning unit 120 may include an oscillation part 121, a demodulation part 122, a decoding part 123, and a channel locking detection part 124, as shown in FIG. 2B.

First, the oscillation part 121 may oscillate a local frequency according to a channel selected currently. The oscillation part 121 may include a phase locked loop (PLL) and a register of the PLL, and oscillate a signal having a fixed frequency corresponding to a value set in the PLL register. In addition, a local frequency oscillated from the oscillation part 121 and a frequency of a satellite broadcast signal received from the switch 20 may be mixed to generate a signal having a preset intermediate frequency.

Here, the oscillation part 121 may oscillate different local frequencies according to selected channels to generate a signal having a fixed intermediate frequency according to control by the control unit 100. For example, when a frequency of a satellite broadcast signal corresponding to a first channel which is selected currently is 860 MHz and a fixed intermediate frequency is 10 MHz, the oscillation part 121 may oscillate a local frequency so that a difference between the local frequency and a frequency of the first channel (local frequency - frequency of the satellite broadcast signal) becomes 10 MHz which is the intermediate frequency, according to control by the control unit 100. Accordingly, in this case, the oscillation part 121 may oscillate a signal having a local frequency of 870 MHz.

However, for example, when a frequency of a satellite broadcast signal corresponding to a second channel which is currently selected is 868 MHz, the oscillation part 121 may oscillate a local frequency so that a difference between the local frequency and a frequency of the second channel becomes 10 MHz which is the intermediate frequency, according to control by the control unit 100. Therefore, when the second channel is selected, the oscillation part 121 may oscillate a signal having a local frequency of 878 MHz. That is, as a frequency of a satellite broadcast signal of a selected channel varies, signals having different local frequencies may be oscillated to generate a fixed intermediate frequency.

Then, the demodulation part 122 may demodulate a satellite broadcast signal converted into a signal having the intermediate frequency. Then, the carrier wave may be removed, and accordingly, the satellite broadcast signal may be converted into a baseband signal. In addition, the decoding part 123 may decode the satellite broadcast signal converted into the baseband signal.

The satellite broadcast signal may be data encoded according to a preset coding method. For example, video data may be data encoded using a method such as H.265/MPEG-H HEVC, H.264/MPEG-4 AVC, H.262/MPEG-2, etc., and audio data may be data encoded using a coding method such as MPEG-H, HE-AAC, AAC, MP3, etc. Accordingly, the decoding part 123 may decode the satellite broadcast signal into a data stream including video data and/or audio data according to a method of encoding the satellite broadcast signal.

Meanwhile, the satellite broadcast signal converted into the data stream may include a channel tuning frame containing channel sync information. In addition, the channel locking detection part 124 of the tuning unit 120 may detect the channel tuning frame from the data stream. In addition, it may be determined whether a bit sequence of the detected channel tuning frame matches a preset bit sequence.

As a result of the determination, depending on whether the bit sequence included in the channel tuning frame matches the preset bit sequence, it may be determined whether the satellite broadcast signal has been correctly decoded into the data stream. In addition, when the bit sequence included in the channel tuning frame matches the preset bit sequence, the control unit 100 may determine that a data stream corresponding to broadcast content of the selected channel is received, from the satellite broadcast signal received based on channel selection information. Therefore, the control unit 100 may store information of the currently selected channel as channel information (channel locking).

On the other hand, when the bit sequence included in the channel tuning frame does not match the preset bit sequence, the control unit 100 may determine, from the satellite broadcast signal received based on channel selection information, that a data stream corresponding to broadcast content of the selected channel has not been received. Therefore, the control unit 100 may not store information of the currently selected channel.

In addition, the input unit 140 is configured to receive an input of information input from the user, and may include at least one input element configured to receive the input from the user. For example, the input unit 140 may include a mechanical input element such as a plurality of buttons, a jog wheel, or a switch, etc., or a touch-type input element. In addition, the input unit 140 may include, as an input element, a remote controller configured to be detachable from the satellite broadcasting receiver 30. As such, when the input unit 140 includes the remote controller, the remote controller and the input unit 140 may be communicatively connected to each other using a preset short-range communication method.

Additionally, the satellite broadcasting receiver 30 may include the output unit 150 capable of playing video content and audio content corresponding to the received satellite broadcast signal. For example, the satellite broadcasting receiver 30 may be configured integrally with a TV system including a display unit capable of playing the video content and an audio output unit capable of playing back the audio content. In this case, the TV system may be configured to correspond to the output unit 150.

In addition, the memory 130 may store data supporting various functions of the satellite broadcasting receiver 30. The memory 130 may store a plurality of application programs (or applications) driven in the satellite broadcasting receiver 30, and data and commands for operation of the satellite broadcasting receiver 30. At least some of these application programs may be downloaded from an external server via wireless communication. In addition, at least some of these application programs may be present on the satellite broadcasting receiver 30 from a time of factory shipment for basic functions of the satellite broadcasting receiver 30 (e.g., reception of a satellite broadcast signal, transmission of a command signal, etc.).

As such, the memory 130 may include information for generating a command signal as data to support functions of the satellite broadcasting receiver 30. In this case, the information for generating the command signal is channel selection information for each channel, and may include a TP list which is a list including information about TPs for respective channels and an input of a satellite signal corresponding to each TP, e.g., information about a particular satellite, information about a combination based on a polarization direction (e.g., a horizontal or vertical polarization) and a particular frequency band (e.g., a high frequency band or a low frequency band) of the satellite signal, and information about a frequency corresponding to each channel. Hereinafter, one portion of the memory 130 of the satellite broadcasting receiver 30, wherein the TP list is stored in the one portion, is to be referred to as a TP list information storage part 131.

In addition, the memory 130 may store information about a channel set by the tuning unit 120. For example, when the tuning unit 120 successfully locks a channel, the control unit 100 may store information of the locked channel as the channel information. Hereinafter, one portion of the memory 130 in which the channel information of the locked channel is stored is to be referred to as a channel information storage part 132.

Meanwhile, the control unit 100 of the satellite broadcasting receiver 30 according to an embodiment of the disclosure may generally control overall functions of the satellite broadcasting receiver 30. For example, when a particular channel is selected, the control unit 100 may search for, from the TP list, channel selection information corresponding to the selected channel and transmit a command signal including found channel selection information to the switch 20. In addition, a satellite broadcast signal received from the switch 20 may be demodulated and decoded through the tuning unit 120, and the satellite broadcast signal decoded into a data stream may be output to the TV system for playback. Alternatively, when the satellite broadcasting receiver 30 is capable of playing back the decoded satellite broadcast signal, i.e., when the satellite broadcasting receiver 30 includes the TV system, the satellite broadcasting receiver 30 may output a video signal and an audio signal corresponding to the data stream of the decoded satellite broadcast signal through the display unit and the audio output unit.

Meanwhile, when there is a user request or when a channel tuning function is executed, the control unit 100 may search for a channel. To this end, the control unit 100 may transmit a plurality of command signals respectively including different channel selection information to the switch 20, and according to a result of determining whether a channel of a satellite broadcast signal received from the switch 20 may be locked, store information about channels for which channel locking is achievable in the memory 130, more specifically, in the channel information storage part 132 as channel information of found channels.

Here, when transmitting the plurality of command signals, the control unit 100 may set a delay time between command signals (command interval delay (CID)) of a preset minimum value. Here, the command interval delay having the minimum value may be a minimum time according to a preset international standard (e.g., DiSEqC).

In addition, the control unit 100 may detect whether channel locking with respect to a currently selected channel is achievable, based on the currently set command interval delay having the minimum value. In this case, when performance of the switch 20 and/or the satellite antenna 10 is sufficient, the switch 20 and/or the satellite antenna 10 may process a received command signal, i.e., within the command interval delay having the minimum value. Accordingly, when a command signal including information of selection of a changed channel is received after the command interval delay having the minimum value has elapsed, a satellite broadcast signal corresponding to the changed channel may be transmitted to the satellite broadcasting receiver 30 through the switch 20.

Meanwhile, when a command signal is transmitted, the control unit 100 may control the oscillation part 121 to oscillate a local frequency for generating a preset intermediate frequency according to a frequency of a selected channel. Then, as the command signal is processed through parsing or the like, a satellite broadcast signal corresponding to the selected channel may be received, and the intermediate frequency within a preset frequency band (e.g., 10 MHz) may be generated according to the oscillated local frequency. Then, the satellite broadcast signal corresponding to the selected channel may be demodulated and decoded by the demodulation part 122 and the decoding part 123, and a bit sequence corresponding to a bit sequence of a preset channel tuning frame may be detected from a data stream obtained by the decoding. Thus, the channel may be locked, and the control unit 100 may store information of the locked channel as channel information.

Therefore, when the switch 20 and/or the satellite antenna 10 may process a received command signal within the command interval delay, each time a channel is changed, a satellite broadcast signal corresponding to the changed channel may be demodulated and decoded, and information of the changed channel may be stored as channel information.

However, when the command interval delay is insufficient compared to performance of the switch 20 and/or the satellite antenna 10, reception of a subsequent command signal may be delayed. Therefore, a part of the subsequently received command signal may not be received by the switch 20.

As such, when a part of a command signal is not received, parsing of the received command signal may not be performed. Then, the switch 20 may not process a currently received command signal, and accordingly, a satellite broadcast signal corresponding to a command signal on which previous processing is complete, that is, a satellite broadcast signal of a previous channel may be received by the satellite broadcasting receiver 30 through the switch 20.

Meanwhile, as described above, when a command signal is transmitted, the control unit 100 may control the oscillation part 121 to oscillate a local frequency for generating a preset intermediate frequency according to a frequency of a currently selected channel, i.e., a changed channel. Accordingly, in a case when a channel is changed from a first channel (e.g., 860 MHz) to a second channel (e.g., 868 MHz), when a command signal for selecting the second channel is transmitted while the oscillation part 121 is controlled to oscillate a first local frequency (e.g., 870 MHz) corresponding to the first channel, the control unit 100 may control the oscillation part 121 to oscillate a second local frequency (e.g., 878 MHz) corresponding to the second channel.

However, as described above, when a command signal for selecting the second channel is not processed due to an insufficient command interval delay, since a valid command signal is not received, the switch 20 may receive a satellite broadcast signal corresponding to channel selection information before the change, i.e., a satellite broadcast signal corresponding to the first channel, and transmit the satellite broadcast signal to the satellite broadcast receiver 30. Therefore, even though the command signal for selecting the second channel has been transmitted, the satellite broadcast signal corresponding to the first channel (e.g., 860 MHz) may be received by the satellite broadcasting receiver 30.

However, as described above, when the command signal for selecting the second channel is transmitted, the control unit 100 controls the oscillation part 121 to generate a local frequency for decoding the second channel. Accordingly, the oscillation part 121 oscillates the second local frequency (e.g., 878 MHz). Thus, an abnormal intermediate frequency (878 MHz - 860 MHz = 18 MHz) that deviates from the preset intermediate frequency (e.g., 10 MHz) is generated, based on the received satellite broadcast signal (860 MHz) and the second local frequency (878 MHz).

Then, demodulation and decoding are performed based on the abnormal intermediate frequency, and a data stream including data bit sequences corresponding to the abnormal intermediate frequency may be generated. Therefore, a bit sequence corresponding to a channel tuning frame is not detected from the data stream, and channel locking may not be achieved.

Meanwhile, as such, when it is determined that channel locking may not be achieved with respect to a currently selected channel, the control unit 100 may increase, by a preset time, a command interval delay which is currently set. Then, when the command interval delay having increased by the preset time has elapsed from a time point when the command signal was transmitted, a command signal corresponding to the currently selected channel may be transmitted again to the switch 20. In addition, the oscillation part 121 may be controlled again to oscillate a local frequency corresponding to the currently selected channel, and it may be determined again whether channel locking may be achieved based on a data stream of a decoded and demodulated satellite broadcast signal. In addition, when the channel locking is achievable, the currently set command interval delay may be stored and, after the stored delay time has elapsed since the command signal was transmitted, another channel according to a next order may be selected and a command signal including channel selection information of the selected channel may be transmitted to the switch 20.

Accordingly, the control unit 100 of the satellite broadcasting receiver 30 according to an embodiment of the disclosure may first set a command interval delay having a preset minimum value, and then, gradually increase the command interval delay depending on whether channel locking may be achieved based on the command interval delay set currently. Then, by performing this process for each channel for which channel tuning is performed, an optimal command interval delay such that all channels undergoing the channel tuning may be locked may be detected. In addition, the detected command interval delay may be stored in the memory 130, and the stored command interval delay may be applied whenever command signals according to channel switching are transmitted. Hereinafter, a portion of the memory 130 in which the command interval delay is stored is to be referred to as a CID information storage part 133.

Therefore, the satellite broadcasting receiver 30 according to an embodiment of the disclosure may detect a minimum command interval delay such that a correct satellite broadcast signal according to the selected channel may be received, according to performance of the switch 20 and/or the satellite antenna 10. Accordingly, a time from when a command signal is transmitted until a next command signal is transmitted may be reduced, and as a result, a channel switching time for a plurality of channels may be reduced.

Meanwhile, the satellite broadcasting receiver 30 according to an embodiment of the disclosure may perform channel switching based on the stored delay time whenever channel switching is requested. That is, when continuous channel switching is requested according to continuous channel switching operations by the user, the control unit 100 may sequentially transmit, to the switch 20, a plurality of command signals corresponding to the continuous channel switching based on the command interval delay stored in the CID information storage part 133. In this case, delay time stored in the CID information storage part 133 may be a minimum command interval delay at which channel locking may be achieved. Therefore, even when channel tuning is not performed, when continuous channel switching is requested by the user, a time needed for the channel switching may be reduced.

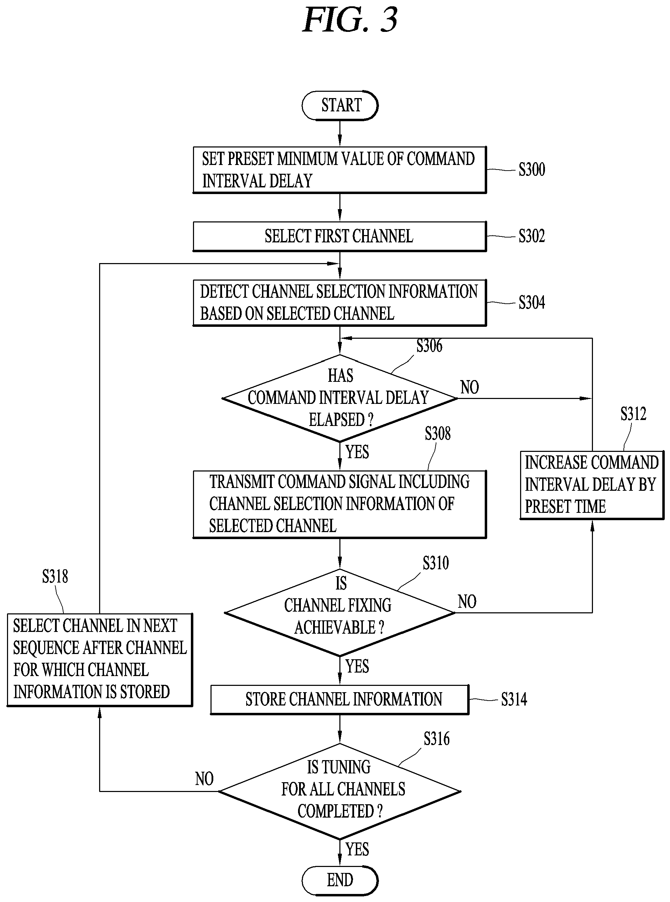

FIG. 3 is a flowchart illustrating an operation process of detecting an optimal command interval delay, the operation process being performed by the satellite broadcasting receiver 30 according to an embodiment of the disclosure described above.

First, the control unit 100 of the satellite broadcasting receiver 30 according to an embodiment of the disclosure may execute a channel tuning function upon selection by a user or when a preset condition is satisfied. In addition, when the channel tuning function is executed, the operation process of FIG. 3 may be executed. In this case, the preset condition may be a case in which prestored channel information is not present. For example, when the satellite broadcasting receiver 30 is installed first, prestored channel information may not be present. Alternatively, the preset condition may be satisfied when information about a satellite broadcasting channel changes according to update of a satellite broadcasting program, or when the switch 20 or the satellite antenna 10 is changed, e.g., when a broadcasting system such as the switch 20 or the satellite antenna 10 is upgraded. Alternatively, the preset condition may be satisfied when channel locking is not achieved based on a satellite broadcast signal received according to channel information stored in the channel information storage part 132.

As such, when the channel tuning function is executed, the control unit 100 may set a command interval delay having a preset minimum value (S300). In addition, a first channel may be selected from channels according to a TP list (S302).

In addition, channel selection information for receiving a satellite broadcast signal corresponding to the first channel currently selected, e.g., TP information including a name of a satellite, a polarization direction (e.g., horizontal or vertical polarization) of a satellite signal, and a frequency band (e.g., a high frequency band or a low frequency band), and information regarding the selected channel may be detected from the TP list (S304).

Then, after a command signal is transmitted, it may be checked whether the command interval delay set currently has elapsed (S306). Then, when the command interval delay has elapsed, a command signal including channel selection information of the currently selected channel may be transmitted to the switch 20 (S308).

In this case, when the currently selected channel is a channel (a first channel) that is tuned for a first time since the channel tuning function was executed, there may be no previously transmitted command signal. Therefore, the control unit 100 may not perform operation S306 described above but immediately perform operation S308.

When the command signal is transmitted to the switch 20, the control unit 100 may determine whether channel locking is achievable with respect to a satellite broadcast signal received through the switch 20 (S310). To determine whether channel locking is achievable in operation S310 described above, the control unit 100 may oscillate a signal having a local frequency corresponding to the currently selected channel and mix the oscillated signal with the received satellite broadcast signal. In addition, a signal generated through the mixing may be demodulated and decoded, and it may be determined whether channel locking is achievable based on the decoded signal.

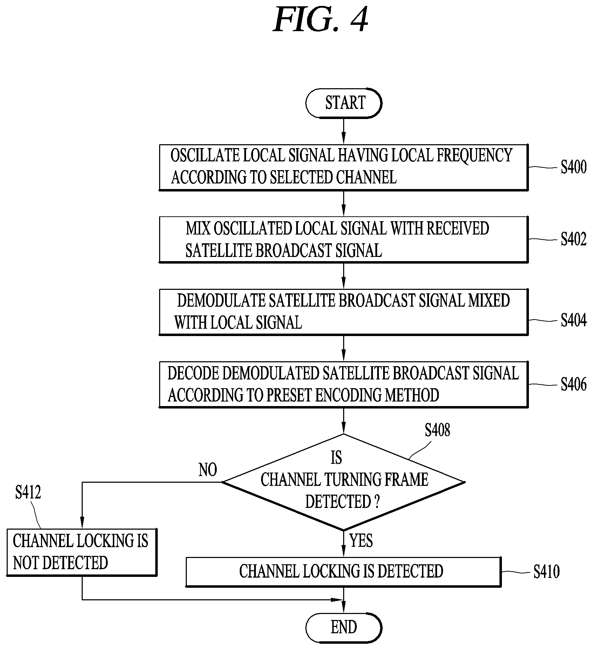

Hereinafter, referring to FIG. 4, a process of determining whether channel locking is achievable in operation S310 described above is to be described in detail.

As a result of the determination in operation S310, when channel locking is not achievable, the control unit 100 may increase the currently set command interval delay by a preset time (S312). Then, operation S306 is performed again to check whether the command interval delay having been increased by the preset time has elapsed from a time point when a previous command signal was transmitted. Then, when the command interval delay having been increased by the preset time has elapsed from the time point when the previous command signal was transmitted, operation S308 is performed to retransmit, to the switch, the command signal including the channel selection information of the currently selected channel, i.e., a channel for which channel locking has not been achieved. Then, operation S310 is performed again to check again whether channel locking is achievable.

Therefore, when channel locking is not performed for the currently selected channel, a process of operations S306 to S312 may be repeated. In addition, whenever operation S312 is performed again, the command interval delay may be increased by the preset time.

In addition, as a result of the determination in operation S310, when channel locking with respect to the satellite broadcast signal received from the switch 20 is achievable in a state when the currently set command interval delay has been set, the control unit 100 may store information of the currently selected channel as channel information in the channel information storage part 132 (S314).

Then, the control unit 100 may check whether tuning for all channels according to the TP list has been completed (S316).

As a result of the checking in operation S316, when the tuning for all the channels has been completed, the control unit 100 may terminate a process of the channel tuning illustrated in FIG. 3. However, as a result of the checking in operation S310, when the tuning for all the channels based on the TP list has not been completed, a next channel after a channel for which channel information is currently stored may be selected as a channel to be tuned (S318).

Then, the control unit 100 proceeds to operation S304 to detect, from the TP list, channel selection information corresponding to a next channel after the currently selected channel, that is, a channel after the channel for which the channel information is stored. Then, a process after operation S304 may be performed again.

Therefore, when channel information of the first channel is stored in operation S314, the control unit 100 may select a channel to be tuned according to the next order, i.e., the second channel. Then, by proceeding to operation S304, channel selection information of the second channel currently selected may be detected. Then, by proceeding to operation S306, it may be determined whether the currently set command interval delay has elapsed since the command signal corresponding to the first channel was transmitted. In addition, when the command interval delay has elapsed, operation S308 may be performed to transmit a command signal including the channel selection information of the currently selected second channel to the switch 20. Then, the control unit 100 may proceed to operation S310 to receive a satellite broadcast signal transmitted from the switch 20 and determine whether channel locking is achievable. In this case, in operation S310, whether the channel locking is achievable may be determined by demodulating and decoding the satellite broadcast signal received according to a local frequency corresponding to the second channel.

In this case, as described above, when the command interval delay is insufficient compared to performance of the switch 20 and/or the satellite antenna 10, a part of the command signal for selecting the second channel may not be received by the switch 20. Then, the command signal may not be parsed, and accordingly, the satellite broadcast signal received by the switch 20 may not be changed. Therefore, the satellite broadcast signal according to the previously received command signal, that is, the command signal corresponding to the first channel may be continuously received. However, since the oscillation part 121 currently oscillates a signal having the local frequency corresponding to the frequency of the second channel, the demodulation of the received satellite broadcast signal may not be performed correctly. Therefore, the channel locking in operation S310 may not be achieved.

Then, the control unit 100 may proceed to operations S310 to S312 to increase the command interval delay. In addition, when the command interval delay is sufficient compared to the performance of the switch 20 and/or the satellite antenna 10, the command signal for selecting the second channel may be fully received and processed by the switch 20. Accordingly, the switch 20 may receive a satellite broadcast signal corresponding to the second channel, and transmit the satellite broadcast signal corresponding to the second channel to the satellite broadcasting receiver 30. Accordingly, according to the local frequency oscillated by the oscillation part 121, a satellite broadcast signal having a preset intermediate frequency may be generated, and demodulated and decoded. In addition, when bit sequences corresponding to a preset channel tuning frame are detected from a decoded data stream (channel locking), the control unit 100 may proceed to operation S314 to store channel information of the second channel.

Then, when the channel information of the second channel is stored, the control unit 100 may proceed to operations S316 and S318 to select a channel according to a next order, i.e., a third channel. In addition, using the same method as described above, it may be determined whether channel locking is achievable, and the command interval delay may be increased according to a result of the determination.

In this case, when the channel locking is not achieved, the control unit 100 may gradually increase the command interval delay and update the delay time stored in the CID information storage part 133 whenever channel locking is achievable. Therefore, when tuning for all channels is completed, an optimal command interval delay allowing channel locking for all channels may be set. Then, the control unit 100 may store the command interval delay currently set, and when a command signal according to subsequent channel switching is transmitted in the future, the command signal may be transmitted to the switch 20 according to the command interval delay. Accordingly, when channel switching for multiple times occurs due to user selection as well as channel tuning, etc., time needed between each channel switching may be reduced.

Meanwhile, FIG. 4 is a detailed flowchart illustrating the operation process in operation S310 of FIG. 3 for determining whether channel locking is achievable, the determining being performed by the satellite broadcasting receiver 30 according to an embodiment of the disclosure.

Referring to FIG. 4, when the command signal including the channel selection information of the currently selected channel is transmitted to the switch 20 in operation S308, the control unit 100 of the satellite broadcasting receiver 30 according to an embodiment of the disclosure may oscillate a signal having a local frequency for generating a preset intermediate frequency, i.e., a local signal according to a frequency of the currently selected channel (S400). In this case, the control unit 100 may control the oscillation part 121 to oscillate a local signal having a frequency higher than the frequency of the currently selected channel by the preset intermediate frequency. Then, the control unit 100 may mix the oscillated local signal with the satellite broadcast signal received from the switch 20 (S402).

Therefore, when the satellite broadcast signal having the frequency of the currently selected channel is received from the switch 20, a satellite broadcast signal having the preset intermediate frequency may be generated based on a difference between the frequency of the local signal (local frequency) and the frequency of the received satellite broadcast signal. However, when a satellite broadcast signal having a frequency different from the frequency of the currently selected channel is received from the switch 20, a signal having a frequency other than the preset intermediate frequency may be generated as a result of the mixing.

When the local signal and the satellite broadcast signal are mixed with each other in operation S402, the control unit 100 may demodulate the mixed satellite broadcast signal into a baseband signal (S404). In this case, the control unit 100 may perform error correction according to a preset method with respect to the satellite broadcast signal demodulated into the baseband signal. For example, the control unit 100 may correct errors that may occur during a process of the mixing and the demodulation through error correction according to a forward error correction (FEC) method.

In addition, the control unit 100 may decode the satellite broadcast signal, having been demodulated into the baseband signal, into a data stream including video content and audio content according to a preset encoding method (S406).

In addition, the control unit 100 may detect a channel tuning frame from the data stream obtained by the decoding (S408). In this case, operation S408 described above may include detecting whether the data stream obtained by the decoding contains a bit sequence corresponding to a preset channel tuning frame.

For example, when the satellite broadcast signal having the preset intermediate frequency has been generated in operation S402, the satellite broadcast signal may be decoded into a data stream including bit sequences corresponding to the video content, the audio content, and data of the currently selected channel. Therefore, the data stream obtained by the decoding may include a bit sequence corresponding to a preset channel tuning frame. When a signal having a frequency other than the intermediate frequency is generated in operation S302, a meaningless bit sequence in which 1s and 0s are mixed may be generated according to a difference in the frequencies. Therefore, even when the demodulation and the decoding are performed, the data stream obtained by the decoding may not contain a bit sequence corresponding to the preset channel tuning frame.

Accordingly, as a result of the checking in operation S408, when a bit sequence corresponding to the channel tuning frame is detected from the data stream, the control unit 100 may determine that channel locking may be achieved with respect to the currently selected channel, based on the currently received, demodulated, and decoded satellite broadcast signal (S410). Then, the control unit 100 may determine that channel locking is achievable in operation S310 of FIG. 3, and proceed to operation S314 of FIG. 3 to store information of the currently selected channel as channel information.

On the other hand, as a result of the checking in operation S408 described above, when a bit sequence corresponding to the channel tuning frame is not detected from the data stream, the control unit 100 may determine that channel locking is not achievable with respect to the currently received, demodulated, and decoded satellite broadcast signal, based on the currently selected channel (S412). Then, the control unit 100 may determine that channel locking is not achievable in operation S310 of FIG. 3, and proceed to operation S312 of FIG. 3 to increase the command interval delay by the preset time. Then, a command signal for selecting the currently selected channel may be transmitted again according to the increased command interval delay, and whether channel locking is achievable may be determined again based on the transmitted command signal.

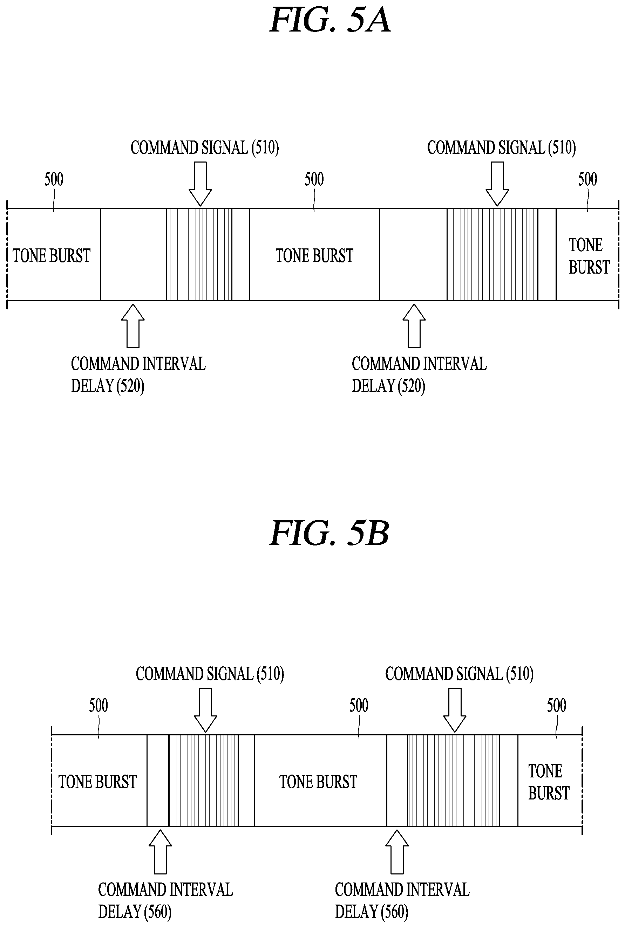

FIGS. 5A and FIGS. 5B illustrate examples in which a plurality of command signals are transmitted from a general satellite broadcasting receiver and the satellite broadcasting receiver according to an embodiment of the disclosure, respectively.

Meanwhile, when the command signal is transmitted to the switch 20, the satellite broadcasting receiver 30 may transmit a preset tone burst signal to the switch 20. In this case, each time a command signal is transmitted, the transmission of the tone burst signal may be halted during a preset command interval delay to distinguish between the tone burst signal and the command signal. FIGS. 5A and 5B to be described below illustrate examples of such cases.

First, FIG. 5A illustrates an example of a tone signal in which a plurality of command signals are continuously transmitted to a switch according to channel tuning or the like in a general satellite broadcast receiver. In this case, while a tone burst signal 500 is being transmitted from the satellite broadcasting receiver to the switch, a command signal 510 including channel selection information of a channel selected for channel tuning may be transmitted. In this case, a command interval delay 520 may be included to prevent confusion between the tone burst signal 500 and the command signal 510.

In this case, as described above, when the command interval delay 520 is insufficient, channel locking according to the selected channel may not be achieved. However, since the satellite broadcasting receiver 30 is unaware of performance of the switch 20 and/or the satellite antenna 10, even when the switch 20 and/or the satellite antenna 10 each having poor performance are connected to a general satellite broadcast receiver, the command interval delay 520 may be set to a time sufficiently long so that channel locking is achievable. Therefore, as shown in FIG. 5A, the command interval delay 520 may be configured to be long.

On the other hand, as described above, the satellite broadcasting receiver 30 according to the embodiment of the disclosure may first set a minimum command interval delay, and determine whether channel locking for the selected channel is achievable according to the set command interval delay. In addition, by gradually increasing the command interval delay according to a result of the determination, a minimum command interval delay 560 at which channel locking for the selected channel is achievable based on the performance of the switch 20 and/or the satellite antenna 10 connected to the satellite broadcasting receiver 30 may be detected.

Therefore, even when a length of the tone burst signal 500 is identical to a length of the command signal 510, a same number of command signals may be transmitted to the switch 20 within a shorter period of time as shown in FIG. 5B. Accordingly, in a case when channel switching continuously occurs like channel tuning, there is an effect such that a time needed for the channel switching may be significantly reduced.

The disclosure may be implemented as computer-readable codes on a medium having a program recorded thereon. The computer-readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). The computer may also include the control unit 100 of the satellite broadcasting receiver 30. The detailed description provided above should not be limitedly construed in all aspects and should be considered as illustrative. The scope of the disclosure should be determined by reasonable interpretation of the appended claims, and all changes within the scope of equivalents of the disclosure are included in the scope of the disclosure.

## Claims

1. A satellite broadcast receiver comprising:
an interface unit configured to receive, from a switch configured to select a satellite broadcast signal received by a satellite antenna, a satellite broadcast signal corresponding to a selected channel and transmit, to the switch, a command signal comprising channel selection information for selecting the channel;
a tuning unit configured to demodulate and decode the satellite broadcast signal received from the switch, and detect whether decoded data contains a preset bit sequence; and,
a control unit configured to
transmit, when transmission of command signals respectively corresponding to a plurality of channels is requested according to a user request or execution of a preset function, each of the command signals to the switch according to a preset order based on a preset delay time, and
control the tuning unit to demodulate and decode a satellite broadcast signal received from the switch each time a command signal is transmitted, based on a frequency of a channel corresponding to the transmitted command signal, determine whether channel locking is achievable with respect to a channel corresponding to the transmitted command signal depending on whether the decoded data contains a preset bit sequence, and change the delay time depending on whether the channel locking is achievable.

2. The satellite broadcast receiver of claim 1, wherein the control unit is configured to
increase the delay time by a preset time, when the channel locking is not achievable as a result of determining whether the channel locking is achievable with respect to a channel selected according to the preset order, and
when the increased delay time has elapsed, transmit a command signal corresponding to the selected channel again to the switch to re-determine whether the channel locking is achievable.

3. The satellite broadcast receiver of claim 1, wherein the tuning unit comprises:
an oscillation part configured to oscillate a local signal having a local frequency corresponding to a frequency of the channel selected according to the preset order;
a demodulation part configured to demodulate a satellite broadcast signal of which a frequency band has been changed according to the satellite broadcast signal mixed with the local signal;
a decoding part configured to decode the demodulated satellite broadcast signal using a decoding method corresponding to a preset encoding method; and,
a channel tuning detection part configured to detect the preset bit sequence from a data stream of the decoded satellite broadcast signal.

4. The satellite broadcast receiver of claim 3, wherein the control unit is configured to
mix the local signal with the satellite broadcast signal received from the switch to convert the received satellite broadcast signal into a signal having a preset frequency band, and
when the selected channel is changed to another channel, control the oscillation part to oscillate a local signal having a local frequency corresponding to a frequency of the another channel obtained by the changing, and mix the local signal having the local frequency corresponding to the frequency of the another channel with the satellite broadcast signal received from the switch.

5. The satellite broadcast receiver of claim 1, wherein, when the demodulation of the satellite broadcast signal is completed, the control unit corrects an error that may occur during a process of the demodulation according to at least one of preset error correction methods, and
the preset error correction methods comprise forward error correction (FEC).

6. The satellite broadcast receiver of claim 1, wherein, when the transmission of the command signals respectively corresponding to the plurality of channels is requested according to the user request or the execution of the preset function, the control unit determines whether channel locking is achievable according to a command signal transmitted by setting a preset minimum delay time, and gradually increases a delay time from the minimum delay time according to a result of the determining of whether the channel locking is achievable.

7. The satellite broadcast receiver of claim 6, wherein the minimum delay time is a time equal to or greater than a delay time between command signals (command interval delay) specified in a digital satellite equipment control (DiSEqC) international standard.

8. The satellite broadcast receiver of claim 1, wherein the command signal comprises, as channel selection information for selecting a particular channel, transponder (TP) information comprising information about a satellite configured to transmit a broadcast signal corresponding to the particular channel and information about a polarization direction of a satellite signal corresponding to the particular channel and a frequency band corresponding to the particular channel.

9. The satellite broadcast receiver of claim 1, wherein the control unit is configured to
transmit a command signal corresponding to a channel selected according to the preset order, and when channel locking is achievable with respect to the selected channel as a result of the determining of whether the channel locking is achievable, store information about the selected channel as channel information and store information about the changed delay time, and
each time channel locking based on a transmitted command signal is achievable, update the stored delay time with information about a delay time between a command signal corresponding to a channel for which the channel locking is achievable and a command signal that was previously transmitted.

10. The satellite broadcast receiver of claim 9, wherein, when continuous channel switching requests are received, the control unit sequentially transmits, to the switch, a plurality of command signals corresponding to the continuous channel switching requests based on prestored delay time information.

11. The satellite broadcast receiver of claim 1, wherein the preset function is channel tuning,
the control unit performs the channel tuning when a preset condition is met, and
the preset condition comprises a case when information about a prestored channel is not present, a case when at least a part of a satellite broadcast program is updated, a case when at least one of the switch and the satellite antenna is changed, and a case when channel locking is not achieved with respect to a satellite broadcast reception signal corresponding to a channel in accordance with information about the prestored channel.

12. The satellite broadcast receiver of claim 1, comprising a television (TV) system.

13. A method of controlling a satellite broadcast receiver, the method comprising:
when transmission of command signals respectively corresponding to a plurality of channels is requested, checking whether a preset delay time has elapsed after a second command signal corresponding to a second channel selected prior to a first channel selected according to a preset order has been transmitted to a switch configured to select a satellite broadcast signal received by a satellite antenna;
when the delay time has elapsed, transmitting a first command signal comprising channel selection information about the first channel to the switch;
determining whether channel locking is achievable with respect to the satellite broadcast signal received from the switch according to the first command signal;
when the channel locking is achievable as a result of the determining of whether the channel locking is achievable, storing the channel information about the first channel; and,
when the channel locking is not achievable as a result of the determining of whether the channel locking is achievable, changing the delay time and checking whether the delay time has elapsed based on the changed delay time, transmitting the first command signal to the switch, and performing again the determining of whether the channel locking is achievable.

14. The method of claim 13, wherein the determining of whether the channel locking is achievable comprises:
oscillating a local signal having a local frequency corresponding to a frequency of the first channel;
mixing, with the local signal, a satellite broadcast signal received from the switch according to the first command signal;
modulating and decoding the satellite broadcast signal mixed with the local signal to have a converted frequency band; and,
determining whether channel locking is achievable depending on whether a bit sequence corresponding to a preset channel tuning frame is comprised, based on a data stream corresponding to the decoded satellite broadcast signal.

15. The method of claim 13, wherein the delay time is set as a preset minimum delay time and gradually increased in units of a preset time, each time the delay time is changed.
